# EUROPÄISCHE PATENTANMELDUNG

(11) **EP 4 345 706 A1**
(43) Veröffentlichungstag der Anmeldung: **03.04.2024**
(21) Anmeldenummer: 23201004.1
(22) Anmeldetag: 29.09.2023
(51) Int. Cl.: G06Q 10/063, G06Q 10/08, G06Q 50/04, G09F 3/20

(54) **VERFAHREN ZUR OPTIMIERUNG EINES FERTIGUNGSPROZESSES**

(30) Priorität: 29.09.2022 DE 102022003620
(71) Anmelder: Orgatex GmbH, 40764 Langenfeld (DE)
(72) Erfinder: Mueller, Patrick, 34132 Kassel (DE)
(74) Vertreter: Seyer & Nobbe Patentanwälte PartmbB

(57) **Zusammenfassung**

Die Erfindung betrifft ein Verfahren zur Optimierung eines Fertigungsprozesses, insbesondere eines manuellen Fertigungsprozesses und visuellen Datenmanagement. Um die Optimierung eines Produktionsprozesses und Einbindung der Mitarbeiter zu ermöglichen, werden folgende Schritte vorgeschlagen:
- einen zentralen online basierten Speicher- und Serverdienst 1 (Cloud),
- Sensorelemente zur Überwachung eines Produktionsprozesses, welche über eine Mobilfunkanbietung Daten senden und/oder empfangen,
- Echtzeiterfassung von Betriebszuständen,
- Echtzeitübertragung der Sensordaten zum Speicher- und Serverdienst 1 (Cloud),
- Empfangen von Daten des Speicher- und Serverdienstes 1 zumindest soweit für die Anzeige von Informationen erforderlich,
- Visualisierte Darstellung von Betriebszuständen und Informationen über Anzeigeeinrichtungen 10, 11, welche unmittelbar die Informationen über ein ESL-Etikett 14 (Elektronic Shelf Label) mit integriertem Modem von der Cloud erhalten.

Durch die Verwendung eines Speicher- und Serverdienstes 1 in Form einer Cloud, besteht über ein Funknetz eine direkte Verbindung mit den weiteren Komponenten, sodass neben einer hohen Datensicherheit auch eine schnelle Übertragungsmöglichkeit gewährleistet ist, um nicht nur die Produktionsprozesse zu überwachen, sondern Informationen an die Mitarbeiter weiterzuleiten.

## Beschreibung

Die Erfindung betrifft ein Verfahren zur Optimierung eines Fertigungsprozesses, insbesondere eines manuellen Fertigungsprozesses und visuellen Datenmanagement.

Auf jedem Fertigungsprozess lastet ein teilweise hoher Kostendruck. Aus diesem Grund ist die Optimierung eines Fertigungsprozesses von großer Bedeutung, damit Stillstände der Fertigungsbänder vermieden oder nur kurzzeitig entstehen können. Mit einem Stillstand des Fertigungsprozesses gehen immer ansteigende Kosten einher und zudem kann darunter auch die Motivation der Mitarbeiter leiden. Die Mitarbeiter sind in der heutigen Zeit anspruchsvoller geworden und wollen rechtzeitig informiert werden sowie in die Produktionsplanung und die Durchführung eingebunden werden. Um die Mitarbeiter zu motivieren und vor dem Hintergrund eines demografischen Wandels und Fachkräftemangels müssen die Unternehmen daher bestrebt sein Mitarbeiter auch in Zukunft langfristig zu binden. Insbesondere langjährige Mitarbeiter haben sich ein großes Know-How angeeignet, welches optimal genutzt werden sollte.

In vielen produzierenden Unternehmen werden noch immer eine Vielzahl von Arbeitsschritten manuell durchgeführt, obwohl die Automatisierung von Produktionsprozessen weit fortgeschritten ist. Manuelle Arbeiten sind aber überall dort erforderlich, wenn feingliedrige oder häufig wechselnde Tätigkeiten ausgeübt werden müssen, die von Menschen wesentlich besser erledigt werden können als von einer Maschine. Sämtliche Fertigungsprozesse benötigen daher Menschen, die aktiv mitarbeiten, um die Produktion aufrecht zu erhalten.

Ein wichtiges Thema zur Motivation der Mitarbeiter besteht darin, eine Transparenz zu entwickeln, damit jedem Mitarbeiter klar wird, welche Probleme aktuell vorliegen und schnellstmöglich beseitigt werden müssen. Hierzu gehört eine transparente Kommunikation von Produktionsplänen, Vorgaben und Zielgrößen einschließlich Leistungskennzahlen, um eine Produktionsüberwachung und langfristige Planung mit Vergleichsgrößen zu ermöglichen. Selbst produktionsfremde Meldungen über Geburtstage, Pausenzeiten oder Betriebsversammlungen führen zu einer verbesserten Motivation der Mitarbeiter. Durch eine offene Informationspolitik wird eine stärkere Identifikation der Mitarbeiter mit dem Unternehmen herbeigeführt und Entscheidungen sind nachvollziehbar und die Ziele klar erkennbar.

Zur Optimierung eines Produktionsprozesses und Einbindung der Mitarbeiter liegt der vorliegenden Anmeldung die Aufgabenstellung zugrunde, ein infrastrukturarmes Informationssystem aufzuzeigen, mit dem der Fertigungsprozess optimiert und die Informationsvielfalt gegenüber den Mitarbeitern erhöht werden kann.

Zur Lösung der Aufgabenstellung werden für das Verfahren zur Optimierung eines Fertigungsprozesses und visuellen Datenmanagement folgende Schritte vorgeschlagen:
- einen zentralen online basierten Speicher- und Serverdienst (Cloud),
- Sensorelemente zur Überwachung eines Produktionsprozesses, welche über eine Mobilfunkanbietung Daten senden und/oder empfangen,
- Echtzeiterfassung von Betriebszuständen,
- Echtzeitübertragung der Sensordaten zum Speicher- und Serverdienst (Cloud),
- Empfangen von Daten des Speicher- und Serverdienstes zumindest soweit für die Anzeige von Informationen erforderlich,
- Visualisierte Darstellung von Betriebszuständen und Informationen über Anzeigeeinrichtungen, welche unmittelbar die Informationen über ein ESL-Etikett mit integriertem Modem von der Cloud erhalten.

Weitere vorteilhafte Ausgestaltungen der Erfindung ergeben sich aus den Unteransprüchen.

Im Vordergrund des Verfahrens zur Optimierung eines Fertigungsprozesses steht hierbei eine schnelle Datenverbindung und -verarbeitung und Ausgabe der benötigen Informationen an möglichst viele Mitarbeiter. Durch die Verwendung eines Speicher- und Serverdienstes in Form einer Cloud, kann eine zentrale online basierte Erfassung sämtlicher Daten erfolgen. Hierzu werden Sensorelemente verwendet, welche sowohl für die Überwachung von Maschinenkomponenten als auch für den Warentransport vorgesehen sind, wobei die Sensorelemente über eine Mobilfunkanbindung Daten senden und/oder empfangen können. Die Sensorelemente können aus verkabelten oder kabellosen Elementen bestehen. Eine Stromversorgung kann beispielsweise über Steckdosen erfolgen. Hierbei können mehrere Sensorelemente über einen Verbindungsstecker miteinander verbunden sein, sodass ein Steckdosenanschluss ausreichend ist. Soweit es sich um ein intelligentes Sensorelement oder Modul handelt, welches mit Strom und Informationen versorgt wird, können die Informationen und eine Stromversorgung über eine elektrische/mechanische Verbindung zu weiteren weniger intelligenten Sensorelementen oder Modulen weitergeleitet werden. Alternativ können nur intelligente Sensorelemente verwendet werden, welche jeweils die Daten senden und empfangen.

Speziell über die Mobilfunkanbindung können die Daten sehr schnell von dem Speicher- und Serverdienst erfasst werden und mit geringerer Verzögerungszeit an die Mitarbeiter mit entsprechenden Informationen weitergeleitet werden. Durch die Mobilfunkanbindung und die Verwendung eines Speicher- und Serverdienstes in Form einer Cloud besteht vorteilhafter Weise nur ein geringer Mehraufwand, um sämtliche Komponenten des Überwachungssystems miteinander zu verbinden, um die entsprechende Kommunikation auszuführen, wobei jede Komponente jeweils für sich alleine agieren kann. Die Sensorelemente können als Modul ausgebildet sein und entweder nur zur Überwachung dienen oder zusätzlich Bestandteil eines ESL-Etiketts mit integriertem Modem sein, welches die Informationen direkt von der Cloud erhält.

Ein wesentlicher Vorteil besteht dadurch, dass diese Lösung eine hohe Flexibilität und ein sukzessiven Einstieg mit geringen Investitionskosten ermöglicht, da die Schaffung notwendiger Infrastrukturen und der Aufbau eines lokalen Netzes nicht erforderlich ist. Vielmehr besteht die Möglichkeit eine sofortige Anpassung auf die Bedürfnisse der Produktionsherstellung vorzunehmen. In diesem Fall kann auf eine Infrastruktur in Form beispielsweise eines Routers verzichtet werden, weil hierzu die Mobilfunknetze herangezogen werden und somit keine Kommunikationsprobleme auf großen Firmengeländen oder Fertigungsstraßen aufgrund einer mangelhaften Überdeckung auftreten können.

Ferner ist die Installation und Inbetriebnahme wesentlich einfacher, weil lediglich eine Anbindung an das Mobilfunknetz erforderlich ist, wobei dieses mit einer großen Reichweite und Überdeckung zur Verfügung steht. Über den Speicher- und Serverdienst in der Cloud können alle Daten erfasst werden, um die notwendigen Informationen unmittelbar an die Mitarbeiter weiterzuleiten. Durch die Echtzeiterfassung von Betriebszuständen, insbesondere von Störungen und die Echtzeitübertragung der Sensordaten zum Speicher- und Serverdienst (Cloud) ist eine schnelle Informationsübermittlung möglich, zudem besteht die Möglichkeit entsprechende Reaktionen, um die Fertigungsprozesse beispielsweise bei einer Störung wieder in Gang zu setzen, schnellstmöglich auszuführen. Die Mitarbeiter können hierbei über visualisierte Darstellungen von Betriebszuständen durch die Anzeigeeinrichtungen informiert werden, welche beispielsweise die Information unmittelbar über die ESL-Etiketten (Electronic Self Label) mit integriertem Modem von der Cloud erhalten, sodass alle wichtigen Daten zur Anzeige gebracht werden können. Dieses visuelle Datenmanagement ermöglicht die Informationen vollständig und schnellstmöglich an sämtliche oder ausgewählte Mitarbeiter weiterzuleiten, wobei vorzugsweise die Anzeigeeinrichtungen verwendet werden. Hierbei kann es sich um sehr große Displays handeln, aber ebenso um kleinere Anzeigeeinrichtungen, die individuell an jeder Fertigungsmaschine angebracht sind. Auf diese Weise können beispielsweise Störungen gezielt weitergleitet werden, um die betreffenden Mitarbeiter rechtzeitig zu informieren und eine Beseitigung der Störung herbeizuführen, damit der Fertigungsprozess nicht über einen längeren Zeitraum unterbrochen wird.

Soweit beispielsweise eine WiFi-Struktur oder ähnliche Netzwerke bereits vorhanden sind, können diese mit eingebunden werden, beispielsweise durch den Einsatz von Sensorelementen oder Anzeigeeinrichtungen, die mit diesen Netzwerken kommunizieren können.

Über den Speicher- und Serverdienst aus der Cloud stehen somit alle wichtigen Informationen sowohl den Mitarbeitern als auch der Geschäftsleitung zur Verfügung und den Personen, die für derartige Störungsfälle zur Beseitigung vorgesehen sind, damit ein reibungsloser Ablauf und eine schnelle Beseitigung einer Störung möglich ist, damit der Fertigungsprozess fortgesetzt werden kann.

Um die wichtigen Informationen sämtlichen Mitarbeitern zukommen zu lassen können die ESL-Etiketten mit klein- oder großformatigen Anzeigeeinrichtungen ausgestattet sein. Alternativ können Beamer verwendet werden, die die Informationen auf entsprechende Wandflächen projizieren. Mithilfe der großformatigen Anzeigeeinrichtungen können somit alle wichtigen und für die Mitarbeiter notwendigen Informationen schnellstmöglich und omnipräsent übermittelt werden.

In Weiterer Ausgestaltung des Verfahrens ist vorgesehen, dass die ESL-Etiketten mit Anzeigeeinrichtungen verbunden sind, um Maschineninformationen, Produktionsstatus einer Produktionslinie, Fehleranzeigen, Kennzahlen mit denen die Leistung innerhalb der Produktion gemessen und bewertet wird, Statusanzeigen oder Informationen an die Mitarbeiter angezeigt werden.

Nahezu sämtliche Informationen können über die Anzeigeeinrichtung mithilfe des ESL-Etiketten übertragen werden, wobei vorzugsweise Fehleranzeigen aber ebenso auch Maschineninformationen, Produktionsstatus sowie Kennzahlen mit denen die Leistungen innerhalb der Produktion gemessen und bewerten werden, angezeigt werden. Hierbei besteht die Möglichkeit, dass die Anzeigeeinrichtung Störungen und Betriebszustände anzeigen, wie sie im Normalbetrieb bestehen beziehungsweise im akuten Fall einer Störung. Zusätzlich können die Störungen durch einen Farbumschlag der Anzeigeeinrichtungen und/oder hochzählende Störungszeiten den Mitarbeitern verdeutlichen, welche Produktionseinrichtungen betroffen sind. Ferner besteht die Möglichkeit logistisch relevante Meldungen oder Kennzahlen anzuzeigen, um die Mitarbeiter hinreichend zu informieren. Ebenso besteht die Möglichkeit ein Warenein- und Warenausgang sowie durchschnittliche Bearbeitungszeiten anzuzeigen, damit beispielsweise durch die verantwortlichen Mitarbeiter rechtzeitig über möglicherweise auftretende Produktionsstörungen informiert werden können, und zwar insoweit rechtzeitig, dass diese vorbeugend vermieden werden können und beispielsweise Materialien rechtzeitig nachbestellt werden.

Die Anzeigeeinrichtung können ebenso qualitätsspezifische Kennzahlen wie KPI (Key Performance Indicators) oder CPK (Process-Capability-Index) anzeigen. Ziel ist es hierbei die kontinuierliche Verbesserung von Produktivität, Qualität und Arbeitsabläufen bei gleichzeitiger Reduzierung von Ausfallzeiten zu erreichen. KPls sind Kennzahlen mit denen die Leistung innerhalb der Produktion gemessen und bewertet werden können. Die Leistungskennzahlen beziehen sich dabei auf Auflastung, Zeit, Material und Personal. Durch Verknüpfung von theoretisch maximaler Leistung und aktueller Ist-Leistung lassen sich Rückschlüssen über die Effektivität einer Produktion ziehen. Ebenso ist durch den Vergleich von Ist-Leistungen und Zielvorgabe einer Linie A im Vergleich zu einer Linie B möglich, um wichtige Aufschlüsse über Optimierungspotentiale innerhalb eines Prozesses zu erlangen. Darüber hinaus lassen sich mit diesen Leistungskennzahlen die Auswirkungen von Änderungen im Prozess messen und bewerten. Soweit die Visualisierung der Daten auf Anzeigeeinrichtungen erfolgt, können die Mitarbeiter motiviert und damit die Leistung gesteigert werden. Messbare Effekte können insbesondere bei einem Wettbewerb verzeichnet werden. Ferner besteht die Möglichkeit, die Anzeigeeinrichtung für Livedurchsagen oder Text-Speech-Anzeigen zu verwenden.

Diese Anzeigeeinrichtung unter Ausnutzung der aufgezeigten Möglichkeiten führen zu vielen Vorteilen. Im Fertigungsbereich können zentral und von allen Stellen einsehbare produktionsrelevante Kennzahlen, Meldungen oder Störungen angezeigt werden, sodass jeder Mitarbeiter der Fertigung direkt erkennt, ob Störungen bestehen und wenn ja, wo diese entstanden sind. Im Logistikbereich können logistikrelevante Kennzahlen oder Meldungen angezeigt werden, welche gegebenenfalls durch einzelne Meldungen der Arbeitsstationen ergänzt werden. Somit ist auf dem ersten Blick ersichtlich, an welchen Arbeitsstationen der Fertigung Mängel vorliegen.

Beim Wareneingang und Warenausgang sorgen die Anzeigeeinrichtungen ebenfalls für notwendige Transparenz und Kennzahlen für die durchschnittlichen Arbeitszeiten und tragen zur Motivation der Mitarbeiter bei. Im Qualitätsmanagement können die Anzeigeeinrichtungen zur Anzeige aktueller qualitätsspezifischer Kennzahlen wie KPI oder CPK genutzt werden. Hierzu kann das Qualitätsmanagement entsprechende Meldungen in der Produktion auslösen, um auf aktuelle Probleme hinzuweisen. Die Fertigungsleiter erlangen zu jeder Zeit einen Überblick über relevante Kennzahlen und Störungen und können somit zielgerichtet eingreifen.

Im Eingangs- und Empfangsbereich können die Anzeigeeinrichtungen durch die Transparenz der Fertigung auf Besucher einen nachhaltigen Eindruck hinterlassen, wobei auch ein Begrüßungsbildschirm für Besucher verwendet werden kann.

Speziell durch Ansagen in der Fertigung lassen sich die Informationen nicht nur optisch, sondern auch akustisch übertragen, um wichtige Informationen zu vermitteln. Texte können hierbei automatisch über Text-to-Speech aus Fehlertexten generiert werden und werden im Anschluss in der Produktion über die Anzeigeeinrichtungen übermitteln, wenn beispielsweise eine Störung auftritt. Natürlich besteht auch die Möglichkeit einer Live Durchsage, sodass beispielsweise Produktionsleiter ein weiteres wertvolles Werkzeug zur Reaktion auf den Fertigungsprozess an die Hand bekommen.

In Ausgestaltung des Verfahrens ist vorgesehen, dass die ESL-Etiketten über Bussysteme oder I/O Kontakte mit Maschinen verbunden sind, um die Informationen über die Betriebszustände von Maschinen sofort erfassen zu können.

In weiterer Ausgestaltung der Erfindung ist vorgesehen, dass die Anzeigeeinrichtung modular aufgebaut und erweiterbar sind, sodass im Bedarfsfall die Anzeigeeinrichtung jederzeit vergrößert werden können.

Ferner ist vorgesehen, dass die Produktions- und Transporteinrichtung durch optische kapazitive oder induktive Sensoren mit Mobilfunkanbindung ausgerüstet sind, um eine Überwachung sowohl auf die Produktionseinrichtungen als auch auf die Transporteinrichtungen auszudehnen. Die Sensoren können verkabelt oder kabellos ausgeführt sein.

In weiterer Ausgestaltung des Verfahrens ist vorgesehen, dass die Meldung zu den elektronischen ESL-Etiketten mit Mobilfunkanbindung weitergeleitet werden, wobei auch eine Übertragung von Nachrichten über E-Mail, SMS, Smart Watches oder Telefonanrufe möglich ist.

Wichtig ist in jedem Fall, dass Informationen über Störungen, Maschinenzustände etc. über elektronische ESL-Etiketten im Speicher- und Serverdienst bereitgestellt werden, damit diese nach Auswertung weitergeleitet werden können.

Zusätzlich besteht die Möglichkeit, dass Warnsignale in Form von optischen und akustischen Signalen erzeugt werden und eine Rückmeldung an ein übergeordnetes Kontrollsystem erfolgt, um sofort notwendig Maßnahmen einzuleiten.

Ebenso besteht die Möglichkeit, dass eine von dem Speicher- und Serverdienst gesteuerte Anzeige eine zur Darstellung des aktuellen Ist-Zustandes zur Verfügung gestellt wird.

Das Verfahren zeichnet sich im weiteren durch die Verwendung von ESL-Etiketten aus, welche mit einem nicht flüchtigen Display ausgestattet zur Darstellung von graphischen Daten und alphanummerischen Informationen verwendbar sind und mit einer stationären Energieversorgung in Form einer langlebigen Batterie ausgestattet sind oder elektromagnetische Energie aus einem Funkfeld entnehmen.

Derartige Etiketten können beispielsweise in einem Produktionsprozess oder einem Warenlager verwendet werden, um Informationen über die Produktion oder der eingelagerten Waren anzuzeigen. Mithilfe der langlebigen Batterie ist die Energieversorgung gewährleistet, wobei für die nicht flüchtigen Displays solche verwendet werden, die einen nur geringen Stromverbrauch aufweisen. Darüber hinaus besteht die Möglichkeit, dass elektromagnetische Energie aus einem Funkfeld zum Aufladen der Batterie entnommen wird.

Der besondere Vorteil der vorliegenden Erfindung besteht darin, dass eine Überwachung eines Produktionsprozesses mithilfe eines Speicher- und Serverdienstes (Cloud) durchgeführt werden kann, wobei zu diesem Zweck Sensorelemente, vorzugsweise kabellose Sensorelemente, zur Überwachung eines Produktionsprozesses eingesetzt werden, welche über eine Mobilfunkanbietung Daten senden und/oder empfangen. Auf diese Weise besteht die Möglichkeit mit Echtzeiterfassung aktuelle Betriebszustände zu übermitteln und mit Echtzeitübertragung der Sensordaten zum Speicher- und Serverdienst (Cloud) Reaktionszeiten zu optimieren. Empfangene Daten des Speicher- und Serverdienstes können im Weiteren, soweit erforderlich, für die Anzeige der Informationen auf Anzeigeeinrichtungen verwendet werden. Auf diese Weise besteht somit die Möglichkeit die visualisierte Darstellung von Betriebszuständen und sonstigen Informationen anzuzeigen, welche unmittelbar über ein ESL-Etikett mit intelligentem Modem von der Cloud weitergeleitet werden. Hierdurch besteht eine äußerst kurze Reaktionszeit dadurch, dass die verwendeten Sensorelemente über eine Mobilfunkanbietung den notwendigen Daten an den Speicher- und Serverdienst (Cloud) übermitteln. Ein wesentlicher Vorteil besteht ferner darin, dass keine aufwendige Infrastruktur erforderlich ist, weil das Mobilfunknetz nahezu in allen Räumen präsent ist und damit die Daten schnellstmöglich an den Speicher- und Serverdienst übermittelt werden können. Ebenso ist über die ESL-Etiketten ein Informationsrückfluss auf schnellstem Wege möglich, um die Anzeigen innerhalb kürzester Zeit zu aktualisieren. Soweit Datennetze bereits zur Verfügung stehen, können diese mit eingebunden werden.

Die Erfindung wird im Weiteren anhand der Figuren näher erläutert.

Es zeigt
- Fig. 1: eine schematische Darstellung der Verbindungen zwischen Warenlagern, Transportfahrzeugen, Produktionsanlagen mit entsprechenden Maschineneinrichtungen mit einem Speicher- und Serverdienst und
- Fig. 2: in einer schematischen Ansicht die Verbindung des Speicher- und Serverdienstes mit entsprechenden Anzeigeeinrichtungen, die entweder einzeln oder im Zusammenhang mit Bearbeitungsmaschinen verwendet werden.

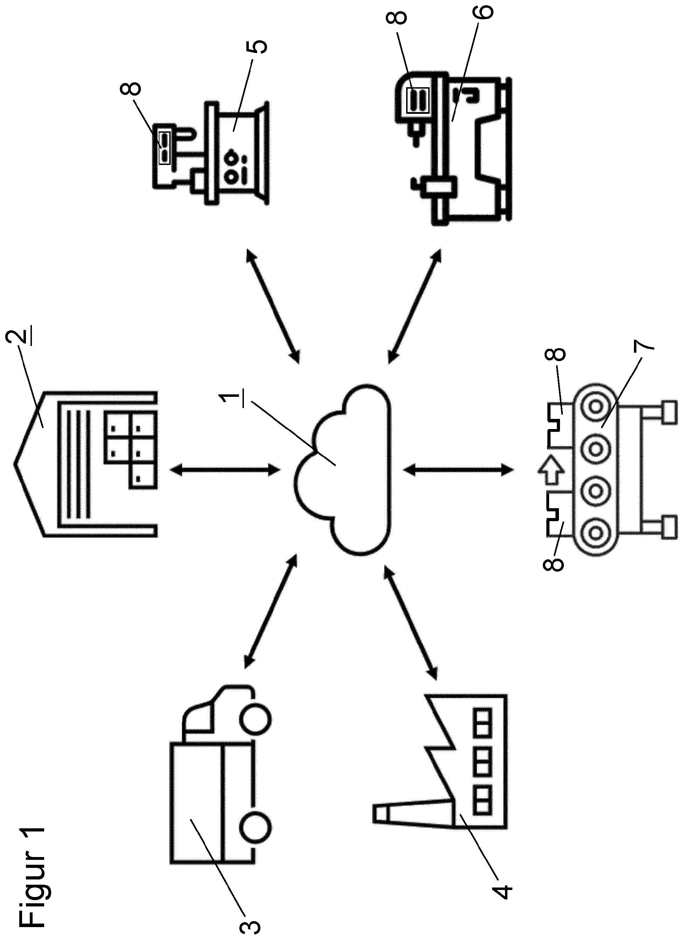

Figur 1 zeigt in einer schematischen Übersicht die Verbindungen eines Speicher- und Serverdienstes 1, beispielsweise mit einem Warenlager 2, einem Transportfahrzeug 3 und einer Produktionsstätte 4. Es bestehen von dem Speicher- und Serverdienst 1 ausgehend direkte Verbindungen über das Mobilfunknetz mit dem Waren- und Materiallager 2, mit dem Transportfahrzeug 3 sowie mit der Produktionsstätte 4, wobei diese zusätzlich mit Werkbänken in Form von Fräsbänken 5, Drehbänken 6 und Fertigungsbändern 7 oder vergleichbaren Einrichtungen in mehrfacher Kombination ausgestattet sein kann. Sämtliche Werkzeugmaschinen besitzen hierbei ebenfalls ESL-Etiketten 8, welche über ein Funknetz eine direkte Anbindung mit dem Speicher- und Serverdienst 1 besitzen. Auf diese Weise wird ermöglicht, dass sämtliche Komponenten, die für eine Produktionslinie benötigt werden ihre Daten an den Speicher- und Serverdienst 1 übertragen und von dort aus weiterverarbeitet werden können.

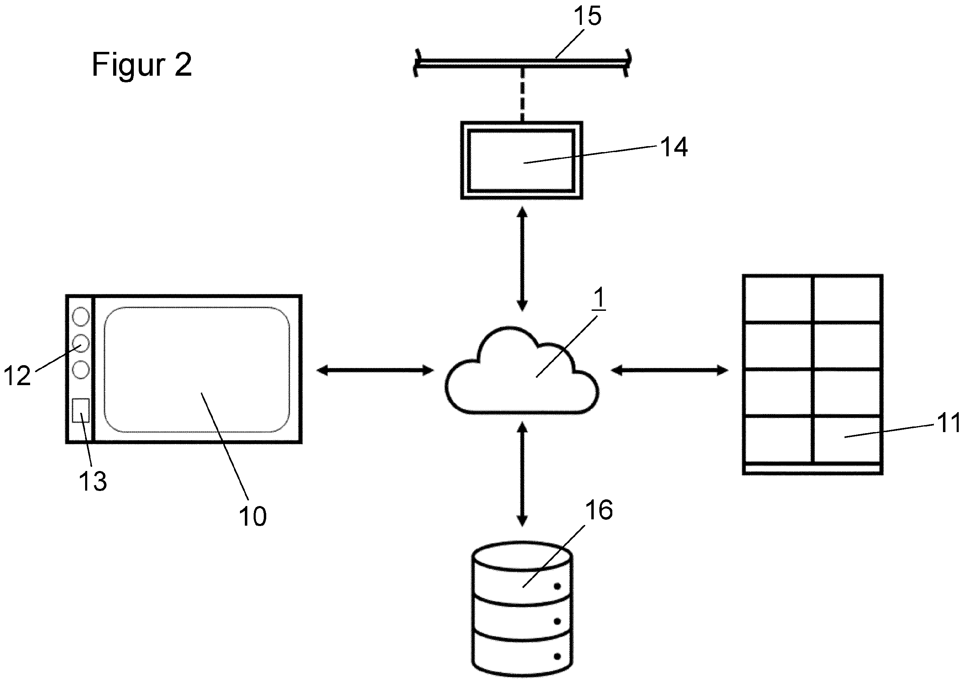

Figur 2 zeigt in einer schematischen Anordnung wiederum den Speicher- und Serverdienst 1, welcher im weiteren mit Anzeigeeinrichtungen, beispielswiese in

Form von Großanzeigen 10 oder zusammengesetzten Anzeigeeinrichtungen 11 über das Mobilfunknetz in Verbindung steht. Durch das Mobilfunknetz ist eine schnelle Datenübertragung möglich und bietet den Vorteil, dass keine aufwendige Infrastruktur benötigt wird. Die Großanzeigen 10 können im Weiteren nicht nur für alphanummerische Anzeigen und grafische Anzeigen verwendet werden, sondern auch zusätzlich mit einer Ampel 12 ausgestattet sein oder einem Lautsprecher 13, damit ähnlich wie bei einer Verkehrsampel visuell zusätzliche Warnhinweise erfolgen können oder alternativ über den Lautsprecher 13 Durchsagen erfolgen können. Der Speicher- und Serverdienst 1 kann im Weiteren über einzelne ESL-Etiketten 14 über das Mobilfunknetz verbunden sein, wobei diese ESL-Etiketten 14 zusätzlich gegebenenfalls über eine Busleitung 15 mit weiteren Produktionseinheiten Daten austauschen können.

Die aufgezeigten Möglichkeiten zur Verwendung eines Speicher- und Serverdienstes 1 werden nur beispielhaft aufgezeigt und können in beliebiger Form erweitert werden, sei es durch zusätzliche Maschinen, die in einer Fertigungsstätte 4 eingesetzt werden oder durch weitere Anzeigeelemente, je nachdem, welche Darstellungsweise gewünscht wird. Erweiterungen sind jederzeit möglich, da eine Verbindung mit dem Speicher- und Serverdienst über ein bestehendes Datennetz, beispielsweise Mobilfunknetz für Handys hergestellt werden kann und damit eine grundsätzliche Voraussetzung einer schnellen Datenübertragung vorliegt. Der besondere Vorteil liegt hierbei darin, dass keine aufwendige Infrastruktur geschaffen werden muss, sondern an jedem beliebigen Ort innerhalb eines Fabrikationsgebäudes, Lagers oder auf dem Transport über beispielsweise die ESL-Etiketten 14 die Verbindung zum Speicher- und Serverdienst 1 hergestellt werden kann. Zur Sicherung der Daten besteht darüber hinaus die Möglichkeit, die übermittelten Daten in einem weiteren physikalischen Datenspeicher 16 zu speichern. Der Datenspeicher 16 kann beispielsweise Bestandteil der IT-Einrichtung einer Firma sein.

### Bezugszeichenliste

- 1: Speicher- und Serverdienst
- 2: Warenlager
- 3: Transportfahrzeug
- 4: Produktionsstätte
- 5: Fräsbank
- 6: Drehbank
- 7: Fertigungsband
- 8: ESL-Etiketten
- 10: Großanzeige
- 11: Anzeigeeinrichtung
- 12: Ampel
- 13: Lautsprecher
- 14: ESL-Etikett
- 15: Busleitung
- 16: Datenspeicher

## Patentansprüche

1. Verfahren zur Optimierung eines Fertigungsprozesses, insbesondere eines manuellen Fertigungsprozesses und visuellen Datenmanagement, umfassend:
- einen zentralen online basierten Speicher- und Serverdienst (Cloud) (1),
- Sensorelemente zur Überwachung eines Produktionsprozesses, welche über eine Mobilfunkanbietung Daten senden und/oder empfangen,
- Echtzeiterfassung von Betriebszuständen,
- Echtzeitübertragung der Sensordaten zum Speicher- und Serverdienst (Cloud) (1),
- Empfangen von Daten des Speicher- und Serverdienstes (1) zumindest soweit für die Anzeige von Informationen erforderlich,
- Visualisierte Darstellung von Betriebszuständen und Informationen über Anzeigeeinrichtungen (10, 11), welche unmittelbar die Informationen über ein ESL (Elektronic Shelf Label) - Etikett (8, 14) mit integriertem Modem von der Cloud erhalten.

2. Verfahren nach Anspruch 1,
**dadurch gekennzeichnet,**
**dass** die ESL-Etiketten (8, 14) mit klein- oder großformatigen Anzeigeeinrichtungen (10, 11) oder Beamern verbunden sind.

3. Verfahren nach Anspruch 1 oder 2,
**dadurch gekennzeichnet,**
**dass** die ESL-Etiketten (8, 14) mit Anzeigeeinrichtungen (10, 11) verbunden sind, um Maschineninformationen, Produktionsstatus einer Produktionslinie, Fehleranzeigen, Kennzahlen mit denen die Leistung innerhalb der Produktion gemessen und bewertet wird, Statusanzeigen oder Informationen an die Mitarbeiter angezeigt werden.

4. Verfahren nach Anspruch 3,
**dadurch gekennzeichnet,**
**dass** die Anzeigeeinrichtung (10, 11) Störungen und Betriebszustände anzeigen, und/oder dass die ESL-Etiketten (8, 14) Störungen durch einen Farbumschlag und/oder hochzählende Störungszeiten anzeigen.

5. Verfahren nach Anspruch 3,
**dadurch gekennzeichnet,**
**dass** die Anzeigeeinrichtung (10, 11) logistisch relevante Meldungen oder Kennzahlen anzeigen, und/oder dass die Anzeigeeinrichtung (10, 11) Warenein- und Warenausgang sowie durchschnittliche Bearbeitungszeiten anzeigen.

6. Verfahren nach Anspruch 3,
**dadurch gekennzeichnet,**
**dass** die Anzeigeeinrichtung (10, 11) qualitätsspezifische Kennzahlen wie KPI (Key-Performance-Indicator) oder CPK (Process-Copability-Index) anzeigen, und/oder dass die Anzeigeeinrichtungen (11) live-Durchsagen oder Text-Speech-Anzeigen vornehmen.

7. Verfahren nach einem der Ansprüche 1 bis 6,
**dadurch gekennzeichnet,**
**dass** die ESL-Etiketten (8, 14) über Bussysteme oder I/O-Kontakte mit Maschinen verbunden sind.

8. Verfahren nach einem der Ansprüche 1 bis 7,
**dadurch gekennzeichnet,**
**dass** die Anzeigeeinrichtungen (10, 11) modular aufgebaut und erweiterbar sind.

9. Verfahren nach einem der Ansprüche 1 bis 8,
**dadurch gekennzeichnet,**
**dass** die Produktions- und Transporteinrichtungen durch optische, kapazitive oder induktive Sensoren mit Mobilfunkanbindung überwacht werden.

10. Verfahren nach einem der Ansprüche 1 bis 9,
**dadurch gekennzeichnet,**
**dass** die Meldung durch die elektronischen ESL-Etiketten (8, 14) mit Mobilfunkanbindung weitergeleitet werden, und/oder dass die ESL-Etiketten (8, 14) Nachrichten über E-Mail, SMS, Smart Watches oder Telefonanrufe weiterleiten.

11. Verfahren nach einem der Ansprüche 1 bis 10,
**dadurch gekennzeichnet,**
**dass** die Informationen über elektronische ESL-Etiketten (8, 14) dem Speicher- und Serverdienst (1) bereitgestellt werden.

12. Verfahren nach einem oder mehreren der Ansprüche 1 bis 11,
**dadurch gekennzeichnet,**
**dass** Warnsignale in Form von optischen und akustischen Signalen erzeugt werden und eine Rückmeldung an ein übergeordnetes Kontrollsystem erfolgt.

13. Verfahren nach einem oder mehreren der Ansprüche 1 bis 12,
**dadurch gekennzeichnet,**
**dass** eine von dem Speicher- und Serverdienst (1) gesteuerte Anzeigeeinrichtung (10, 11) zur Darstellung des aktuellen Ist-Zustandes zur Verfügung gestellt wird.

14. Verfahren nach einem oder mehreren der Ansprüche 1 bis 13,
**dadurch gekennzeichnet,**
**dass** die Etiketten aus ESL-Etiketten (8, 14) bestehen, welche mit einem nicht-flüchtigen Display ausgestattet zur Darstellung von Grafikdaten und alphanummerischen Informationen verwendbar sind und mit einer stationären Energieversorgung in Form einer langlebigen Batterie ausgestattet sind oder elektromagnetische Energie aus einem Funkfeld entnehmen.
